# EUROPÄISCHE PATENTSCHRIFT

(11) **EP 2 504 600 B1**
(45) Veröffentlichungstag und Bekanntmachung des Hinweises auf die Patenterteilung: **24.08.2016**
(21) Anmeldenummer: 10782185.2
(22) Anmeldetag: 05.11.2010
(51) Int. Cl.: F16D 65/14

(54) **ELEKTROMAGNETISCH BETÄTIGBARE BREMSE UND VERFAHREN ZUM BETREIBEN EINER BREMSE**
ELECTROMAGNETICALLY ACTUABLE BRAKE AND METHOD FOR OPERATING A BRAKE
FREIN À ACTIONNEMENT ÉLECTROMAGNÉTIQUE ET PROCÉDÉ POUR FAIRE FONCTIONNER UN FREIN

(30) Priorität: 26.11.2009 DE 102009055698
(43) Veröffentlichungstag der Anmeldung: 03.10.2012
(73) Patentinhaber: SEW-EURODRIVE GmbH & Co. KG, 76646 Bruchsal (DE)
(72) Erfinder: QUADT, Steffen, 76297 Stutensee (DE); MAHLEIN, Jochen, 76139 Karlsruhe (DE); MAHLER, Tobias, 76689 Karlsdorf-Neuthard (DE)
(86) Internationale Anmeldenummer: PCT/EP2010/006747
(87) Internationale Veröffentlichungsnummer: WO 2011/063889

(56) Entgegenhaltungen:
- EP-A2- 1 258 646
- WO-A1-2010/055176
- DE-A1- 3 424 595
- DE-A1- 3 642 013
- JP-A- 8 014 283
- US-A- 3 763 968

## Beschreibung

Die Erfindung betrifft ein Verfahren zum Betreiben einer Bremse.

Es ist bekannt, Elektromotoren an ihrer von der Abtriebseite abgewandten Seite mit einer elektromagnetisch betätigbaren Bremse zu verbinden, wodurch die Rotorwelle des Elektromotors abbremsbar ist. Aus der Bremse austretende Felder magnetisieren teilweise auch drehbar gelagerte Stahlteile, wie beispielsweise die Rotorwelle, so dass ferromagnetische Teilchen anhaften und die Standzeit verringern können.

Für eine solche Bremse ist aus der DE 36 13 294 C2 bekannt, die Wicklung in eine erste und eine zweite Ringwicklung aufzuteilen, um ein schnelles Lüften bewirkbar zu machen

Aus der EP1 258 646 A2 ist eine Bremsspule bekannt, deren jeweils zueinander benachbarte Teilsspulen entgegengesetzt magnetisch gepolt sind.

Aus der DE 34 24 595 A1 ist eine elektromagnetisch lüftbare Federdruckbremse bekannt.

Aus der DE 36 42 013 A1 ist eine elektromagnetisch betätigbare Federdruckbremse bekannt.

Aus der JP 8 014283 A ist eine multipolare elektromagnetische Bremse bekannt.

Aus der US 3 763 968 A ist eine elektromagnetische Bremse bekannt.

Aus der WO 2010/ 055 176 A1 ist eine elektrische Bremse für einen Aufzug bekannt.

Der Erfindung liegt daher die Aufgabe zugrunde, eine elektromagnetisch betätigbare Bremse weiterzubilden, wobei die Standzeit erhöht sein soll.

Erfindungsgemäß wird die Aufgabe bei dem Verfahren zum Betreiben einer Bremse nach den in Anspruch 1 angegebenen Merkmalen gelöst.

Wichtige Merkmale bei dem Verfahren zum Betreiben einer Bremse sind, dass die Bremse eine elektromagnetisch betätigbare Bremse ist,
deren Bremsspule eine Wicklung umfasst, welche aus einer ersten Anzahl und einer zweiten Anzahl von Teilwicklungen gebildet ist,
wobei zum Lüften der Bremse die erste Anzahl von Teilwicklungen innerhalb einer ersten Zeitdauer mit einem elektrischen Strom beaufschlagt wird, der stärker ist als derjenige Strom, mit welchem die zweite Anzahl von Teilwicklungen nach der ersten Zeitdauer beaufschlagt wird.

Von Vorteil ist dabei, dass ein schnelles Lüften und ein energiesparendes Halten der Bremse ermöglicht ist.

Bei einer vorteilhaften Ausgestaltung wird der Strom stets derart schwach gehalten, dass das Material des Spulenkörpers nicht gesättigt wird. Von Vorteil ist dabei, dass die Flussführung vollständig innerhalb des Spulenkörpers und der Ankerscheibe sowie dem gegebenenfalls bestehenden Arbeitsluftspalt dazwischen ermöglicht ist. Somit sind Stahlteile oder andere magnetisierbare Teile in der Umgebung der Bremse keinem Magnetfeld oder zumindest keinem wesentlichen Magnetfeldanteil ausgesetzt.

Bei einer vorteilhaften Ausgestaltung ist der Strom derart stark, dass das Material des Spulenkörpers zumindest teilweise gesättigt ist, wobei der Fluss nicht durch die Welle geführt wird. Von Vorteil ist dabei, dass magnetisierbare, insbesondere ferromagnetische oder ferrimagnetische, Metallpartikel nicht an der Welle anhaften und somit nicht zur Verschmutzung der Welle beitragen.

Bei einer vorteilhaften Ausgestaltung wird ein Rückfluss durch eine Welle oder andere Stahlteile der Bremse oder von benachbarten Vorrichtungen reduziert oder verhindert. Denn die Teilwicklungen ermöglichen eine von einer gewöhnlichen Ringwicklung abweichende Anordnung, so dass der von jeder Teilwicklung erzeugte Fluss im Wesentlichen innerhalb des Spulenkörpers und einer Ankerscheibe der Bremse führbar ist. Auf diese Weise ist auch die Verschmutzung mit ferromagnetischen Teilchen, wie Metallspäne oder dergleichen, verhinderbar. Denn der Fluss ist geschlossen innerhalb der Bremse führbar und es werden keine weiteren Teile magnetisiert, an denen dann diese Teilchen magnetisch haften könnten. Somit ist die Verschmutzung verringert und somit die Standzeit erhöht.

Bei einer vorteilhaften Ausgestaltung ist eine jeweilige Teilwicklung um einen jeweils zugeordneten Dom eines Spulenkörpers herum ausgeführt, wobei die Dome sich aus einem gemeinsamen Grundkörper erheben. Von Vorteil ist dabei, dass eine einfache Fertigung des Spulenkörpers samt Domen ausführbar ist, wobei ein kostengünstiger Stahlguss verwendbar ist. Außerdem ist somit der durch die Dome geführte Fluss auch durch den Grundkörper führbar.

Bei einer vorteilhaften Ausgestaltung ist der Grundkörper im Wesentlichen als Rotationskörper ausgeführt, insbesondere wobei der Grundkörper eine torusförmige Vertiefung aufweist, auf deren Grund die Dome angeordnet sind. Von Vorteil ist dabei, dass eine einfache Herstellung mittels Druckguss ausführbar ist. Außerdem ist der Grundkörper somit topfartig ausführbar, wobei ein radial von der Rotationsachse weit entfernter Außenrand und ein zur Rotationsachse nächstkommender Innenrad in axialer Richtung hervorragen und somit mittels der für den Magnetfluss als Joch fungierenden Ankerscheibe für den Magnetfluss verbindbar sind. Auf diese Weise ist der Fluss geschlossen führbar in einem Raumbereich, der durch Spulenkörper und Ankerscheibe definiert ist, also in einem Raumbereich, der zwischen einem minimalen und maximalen Radialabstand und zwischen einem minimalen und maximalen axialen Wert sich befindet, wobei der minimale Radialabstand nicht-verschwindend ist.

Bei einer vorteilhaften Ausgestaltung ist die Bremse zum Erzeugen von Bremsmoment an einer Welle vorgesehen ist, wobei die Wellenachse Symmetrieachse des Rotationskörpers ist. Von Vorteil ist dabei, dass mittels der Bremse die Rotationsbewegung eines Elektromotors abbremsbar ist. Außerdem ist die Welle zentrisch in der Bremse anordenbar und trotzdem wird der Fluss nicht in der Welle rückgeführt. Insbesondere ist dabei der Wellenaußendurchmesser kleiner als der minimale Radialabstand.

Bei einer vorteilhaften Ausgestaltung sind die Teilwicklungen in Umfangsrichtung um die Achse herum voneinander regelmäßig beabstandet. Von Vorteil ist dabei, dass geringe Drehmoment-Schwankungen beim Bremsen erzeugt werden. Außerdem ist der Fluss jeder Teilspule in einem Raumbereich erzeugt, der nicht die Achse enthält, wodurch der Fluss auch wiederum geschlossen rückführbar um die Teilspule herum, ohne den Raumbereich der Achse zu nutzen. Auf diese Weise ist im Bereich der Achse ein ferromagnetisches Teil, wie Welle aus Stahl, anordenbar, das nicht zur Rückführung des Flusses beitragen muss. Zusätzlich ist ein hoher Füllfaktor erreichbar.

Bei einer vorteilhaften Ausgestaltung ist der Spulenkörper aus Ferrit oder einem anderen Material gefertigt, dessen magnetische Permeabilität µᵣ größer ist als 100 oder 1000. Von Vorteil ist dabei, dass eine Rückführung des wesentlichen Anteils des von der jeweiligen Teilspule erzeugten Flusses innerhalb des Spulenkörpers ermöglicht ist.

Bei einer vorteilhaften Ausgestaltung sind die Teilwicklungen gleichsinnig ausgeführt. Von Vorteil ist dabei, dass eine besonders stark anziehende Kraft auf die axial bewegbar angeordnete Ankerscheibe der Bremse ausübbar ist.

Bei einer alternativen vorteilhaften Ausgestaltung sind die zueinander nächstbenachbarte Teilwicklungen mit gegenläufigem Wicklungssinn ausgeführt. Von Vorteil ist dabei, dass der Fluss einer Teilspule zumindest teilweise durch den Kern, insbesondere Dom, einer oder beider nächstbenachbarten Teilspulen rückführbar ist.

Bei einer vorteilhaften Ausgestaltung ist mittels Bestromung der Wicklung eine derartige elektromagnetische Kraft erzeugbar, dass eine Ankerscheibe, insbesondere eine aus einem ferromagnetischen Material gefertigte Ankerscheibe, entgegen einer von Federelementen erzeugten Kraft zur Wicklung axial anziehbar ist. Somit ist die Bremse mittels Bestromung der Bremsspule, umfassend die aus Teilwicklungen zusammengesetzte Wicklung, lüftbar und fällt mittels Beenden der Bestromung ein.

Bei einer vorteilhaften Ausgestaltung ist bei unbestromter Wicklung die Ankerscheibe mittels der von den Federelementen erzeugten Federkraft auf einen Belagträger mit Bremsbelägen axial hin bewegbar, so dass eine Bremskraft durch den relativ zur Ankerscheibe und einem weiteren stationären Teil, insbesondere Bremslagerschild, drehbar gelagerte Belagträger erzeugbar ist, insbesondere wobei der Belagträger auf einer Welle formschlüssig verbunden ist, insbesondere auf einer am Bremslagerschild gelagerten Welle.

Von Vorteil ist dabei, dass mittels des Belagträgers ein Bremsmoment auf die formschlüssig verbundene Welle übertragbar ist. Dabei weist der Belagträger vorteiligerweise eine Innenverzahnung auf, die im Eingriff steht mit einer Außenverzahnung der Welle. Bei gerader Ausführung der Verzahnung ist der Belagträger axial verschiebbar. An beiden axial orientierten Seiten des scheibenartig ausgeführten Bremsbelagträgers sind jeweilige Bremsbeläge vorgesehen, so dass bei axialem Andrücken mittels der Ankerscheibe die Bremsbeläge eine Bremswirkung erzeugbar machen, wobei ein erster der beiden Bremsbeläge mit der Ankerscheibe und der andere mit einem Gehäuseteil und/oder Lagerschild in Reibkontakt tritt.

Bei einer vorteilhaften Ausgestaltung ist eine erste Anzahl der Teilwicklungen unabhängig von der restlichen Anzahl der Teilwicklungen bestrombar. Von Vorteil ist dabei, dass zu Beginn der Bestromung eine niedrige Gesamtinduktivität der Bremsspule auftritt, wodurch mittels einer Versorgungsspannung ein Strom schnell aufbaubar ist und somit ein entsprechendes magnetisches Feld erzeugbar ist, das zum schnellen Lüften der Bremse geeignet ist. Nach dem Lüften der Bremse, also axialem Verschieben der Ankerscheibe, sind alle Teilwicklungen gleichmäßig bestrombar, insbesondere aus derselben Versorgungsspannung, so dass bei der nun vorhandenen höheren Induktivität ein kleinerer Strom aufrecht erhalten werden muss, der zum Halten der Ankerscheibe ausreichend ist.

Bei einer vorteilhaften Ausgestaltung sind eine erste Anzahl von Teilwicklungen in Reihe geschaltet und somit gemeinsam mit einem ersten Stromwert bestrombar,

insbesondere wobei eine zweite Anzahl von Teilwicklungen in Reihe geschaltet sind und somit gemeinsam mit einem zweiten Stromwert bestrombar sind. Von Vorteil ist dabei, dass eine kurzzeitige hohe Stromzufuhr an die erste Anzahl ermöglicht ist, wodurch ein schnelles Lüften der Bremse ermöglicht ist. Bei Bestromung mit dem zweiten Stromwert ist der Haltestrom vorsehbar, der somit auch eine geringere ohmsche Wärmeleistung bewirkt, so dass die Entwärmung der Bremse einfach und ohne großen Zusatzaufwand ermöglicht ist.

Bei einer vorteilhaften Ausgestaltung sind die erste Anzahl von Teilwicklungen mit einem ersten Wicklungsdraht und die zweite Anzahl von Teilwicklungen mit einem zweiten Wicklungsdraht gewickelt, wobei der Drahtdurchmesser des ersten Wicklungsdrahtes größer ist als der Drahtdurchmesser des zweiten Wicklungsdrahtes. Von Vorteil ist dabei, dass die erste Anzahl mit einem starken Strom beaufschlagbar ist zum Schnellen Lüften und die zweite Anzahl mit einer jeweiligen hohen Windungszahl ausführbar ist, wodurch ein geringer Haltestrom notwendig ist.

Bei einer vorteilhaften Ausgestaltung wird der von den Teilwicklungen erzeugte Fluss im Wesentlichen durch die Ankerscheibe und den Spulenkörper samt Domen geführt. Von Vorteil ist dabei, dass in der Umgebung sich befindende ferromagnetische Teile, wie Stahlteile, keinen magnetischen Rückfluss führen müssen und somit an ihnen keine ferromagnetischen Partikel anhaften können, wodurch die Verschmutzungsgefahr reduziert ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist einen Schnitt durch eine Bremsspule nach Stand der Technik dargestellt.
Figur 2 zeigt das Wickelschema und den Wicklungssinn der Bremsspule nach Stand der Technik.
Figur 3 zeigt einen Schnitt durch eine erfindungsgemäße Bremsspule.
Figur 4 zeigt ein erfindungsgemäßes Wickelschema und den zugehörigen Wicklungssinn der erfindungsgemäßen Bremsspule.
Figur 5 zeigt eine alternative erfindungsgemäße Ausführungsform.
Figur 6 zeigt einen Spulenkörper der Bremsspule für die Ausführung nach Figur 3, 4 oder 5.

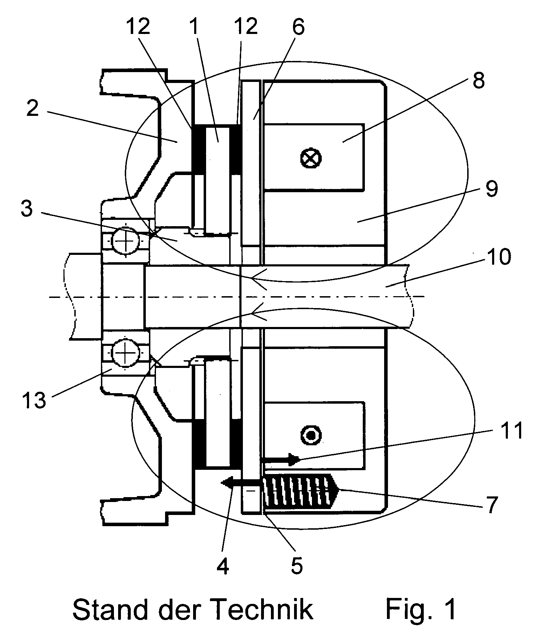

In Figur 1 ist auf einer Welle 10, beispielsweise eine Rotorwelle eines Elektromotors oder eine Welle eines Getriebes, eine Mitnehmerteil 3 formschlüssig oder kraftschlüssig verbunden.

Vorzugsweise weist das Mitnehmerteil an seinem äußeren Umfang eine Verzahnung auf, so dass ein Belagträger 1, der eine Ausnehmung mit Innenverzahnung aufweist, in Umfangsrichtung formschlüssig verbindbar ist mit dem Mitnehmerteil, indem die Verzahnungen miteinander in Eingriff bringbar sind.

Axial beidseitig weist der Belagträger 1 Bremsbeläge 12 auf, mittels welcher eine Bremskraft an einem Bremslagerschild 2 bewirkbar ist und an einer Ankerscheibe 6, wobei zwischen Bremslagerschild 2 und Ankerscheibe 6 der Belagträger 1 angeordnet ist.

Das Bremslagerschild 2 führt auch gehäusebildende Funktion für die Bremse und/oder eine weitere Vorrichtung, wie beispielsweise Motor, aus und nimmt ein Lager 13 auf, mit dem die Welle 10 lagerbar ist.

Am Bremslagerschild 2 ist auch der Spulenkörper 9 verbunden, in welchem sich Federelemente 7 zur Erzeugung einer axial gerichteten Federkraft 4 abstützen. Mittels der Federkraft 4 wird die Ankerscheibe 6 auf den Belagträger 1 gedrückt, wenn nicht die von der Bremsspule 8 bei deren Bestromung erzeugte, auf die Ankerscheibe wirkende elektromagnetische Kraft 11 betragsmäßig überwiegt und die Bremse gelüftet bleibt.

Im gelüfteten Zustand liegt die Ankerscheibe 6 am Spulenkörper an, so dass ein Luftspalt 5 zwischen Ankerscheibe 6 und Belagträger 1 mit Bremsbelägen auftritt.

Im eingefallenen zustand, also beispielsweise bei nicht oder nur gering bestromter Bremsspule 8 drückt die axial verschieblich angeordnete Ankerscheibe auf den mit der Welle mitrotierenden Belagträger und verschiebt diesen in axialer Richtung, bis er mit dem Bremslagerschild 2 in Berührung tritt.

Die Bremsenergie wird einerseits von der Ankerscheibe und andererseits vom Bremslagerschild 2 abgeführt, insbesondere auch an die Umgebung.

Die Ankerscheibe ist vorzugsweise aus einem ferromagnetischen Material, wie Stahl oder dergleichen, gefertigt.

Der Spulenkörper 9 ist vorzugsweise aus einem ferromagnetischen Stahlguss, wie GG-Guss oder dergleichen. Vorzugsweise wird die Bremsspule 8 mit Gleichstrom oder zumindest unipolarem Strom bestromt.

Vorzugsweise ist die Bremsspule 8 in einem Kunststoff-Spulenträger eingelegt und mit diesem in einer ringförmigen Nut des Spulenkörpers eingesenkt angeordnet.

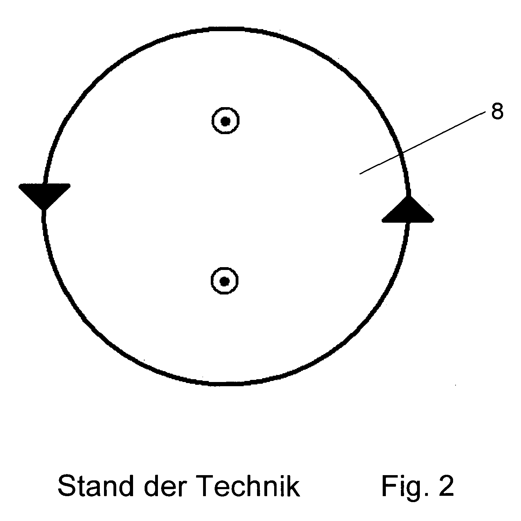

In Figur 2 ist gezeigt, dass der Wicklungssinn der Bremsspule 8 in einer ersten Richtung ausgeführt ist. Die Wicklung entspricht also einer Ringspule.

Die Unterschiede der Erfindung zur Bremsspule nach Figur 1 beziehen sich im Wesentlichen auf die Bremsspule, die aus mehreren gleichsinnig oder alternativ gleichsinnig und gegensinnig ausgeführten Teilwicklungen.

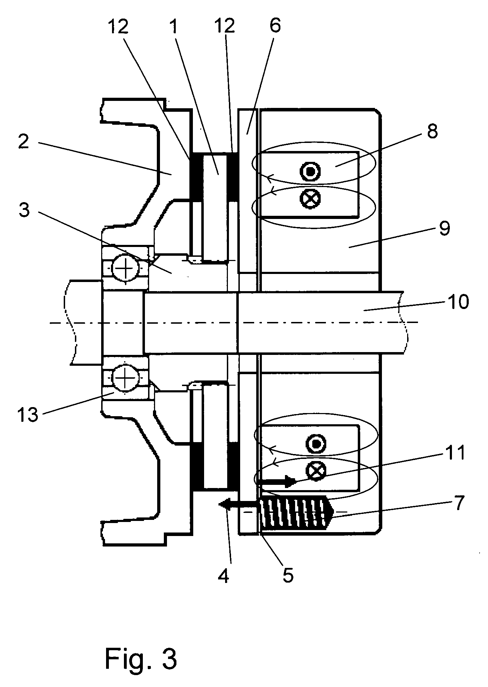

In Figur 3 ist ein Querschnitt durch eine erste erfindungsgemäße Ausführungsform gezeigt.

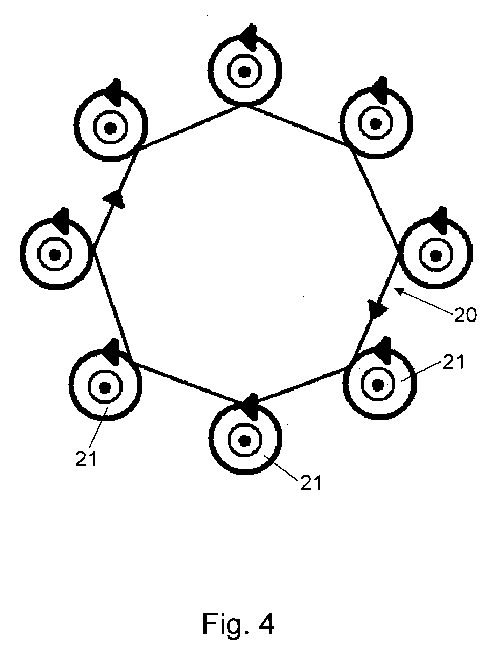

Wie in Figur 4 dargestellt, umfasst die Bremsspule nicht mehr eine einzige Wicklung sondern mehrere Teilwicklungen 21, die gleichsinnig ausgeführt sind. Die Wicklungen sind mit einem einzigen durchgehenden Wicklungsdraht 20 gewickelt.

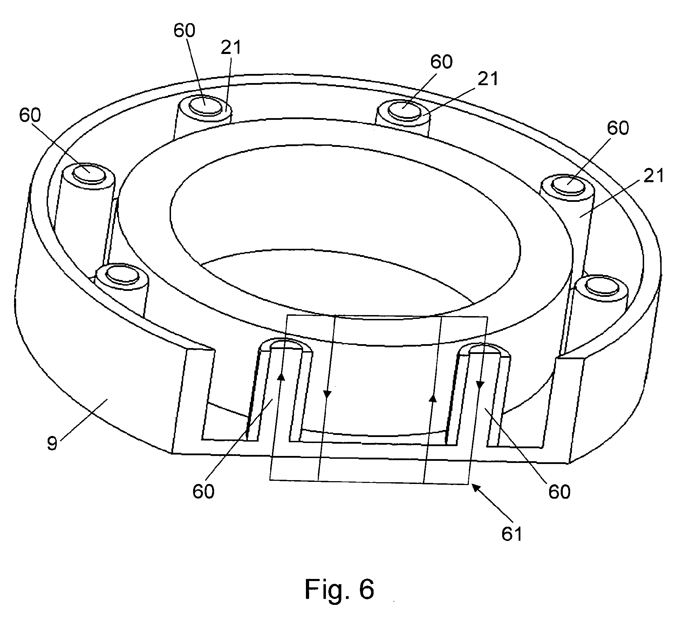

Wie in Figur 6 ausgeführt ist, weist der Spulenkörper 9 für jede Teilwicklung 21 einen Dom auf, um den herum die Teilwicklungen 21 herum angeordnet sind. Die Dome 60 mit den Teilwicklungen sind in Umfangsrichtung gleichmäßig voneinander beabstandet, wobei die mathematische Achse zur Umfangsrichtung durch die Wellenachse gebildet ist.

Der Verlauf des Hauptanteils des magnetischen Feldes verläuft in der durch die Feldlinien 61 angegebenen Weise. Dabei fließt der von einem Dom 60 erzeugte Fluss zumindest teilweise durch den nächstbenachbarten Dom 60 in umgekehrter Richtung zurück. Mittels der dortigen gegensinnigen Teilwicklung wird der Fluss verstärkt. Ein Rückfluss durch die Welle oder andere Stahlteile wird somit reduziert oder verhindert.

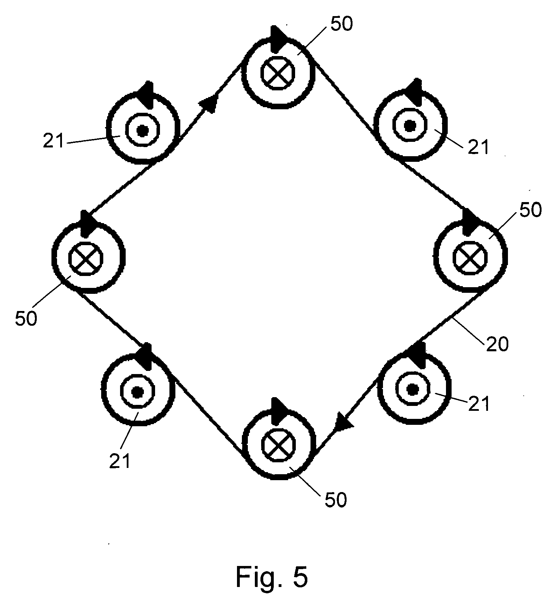

Bei einem alternativen Ausführungsbeispiel gemäß Figur 5 sind in Umfangsrichtung voneinander benachbarte Teilwicklungen (21, 50) mit umgekehrtem Wicklungssinn ausgeführt.

Statt der beschriebenen Bremse ist die Erfindung auch auf eine Kupplung anwendbar, wobei dann statt die zuvor beschriebenen stationären Teile drehbar gegen die Umgebung gelagert sind. Der Einfachheit halber werden Kupplungen in diesem Sinne hier auch als Bremsen bezeichnet.

### Bezugszeichenliste

1 Belagträger
2 Bremslagerschild
3 Mitnehmerteil
4 Federkraft
5 Luftspalt
6 Ankerscheibe
7 Federelement
8 Bremsspule
9 Spulenkörper
10 Welle
11 an der Ankerscheibe 6 angreifende elektromagnetische Kraft
12 Bremsbelag
13 Lager
20 Wicklungsdraht
21 Wicklung mit erstem Wicklungssinn
50 Wicklung mit zum ersten umgekehrten Wicklungssinn
60 Dom
61 Feldlinien

## Patentansprüche

1. Verfahren zum Betreiben einer Bremse,
wobei die Bremse eine elektromagnetisch betätigbare Bremse ist,
deren Bremsspule (8) eine Wicklung umfasst, welche aus einer ersten Anzahl und einer zweiten Anzahl von Teilwicklungen gebildet ist,
**dadurch gekennzeichnet, dass**
zum Lüften der Bremse die erste Anzahl von Teilwicklungen innerhalb einer ersten Zeitdauer mit einem elektrischen Strom beaufschlagt wird, der stärker ist als derjenige Strom, mit welchem die zweite Anzahl von Teilwicklungen nach der ersten Zeitdauer beaufschlagt wird.

2. Verfahren nach Anspruch 1,
**dadurch gekennzeichnet, dass**
der Strom stets derart schwach gehalten wird, dass das Material des Spulenkörpers (9) nicht gesättigt wird,
oder dass
der Strom derart stark ist, dass das Material des Spulenkörpers (9) zumindest teilweise gesättigt ist, wobei der Fluss nicht durch die Welle (10) geführt wird.

3. Verfahren nach Anspruch 1 oder 2,
wobei der Grundkörper im Wesentlichen als Rotationskörper ausgeführt ist, wobei der Grundkörper eine torusförmige Vertiefung aufweist, auf deren Grund die Dome (60) angeordnet sind.

4. Verfahren nach Anspruch 1, 3 oder 2,
- wobei eine erste Anzahl von Teilwicklungen in Reihe geschaltet sind und somit gemeinsam mit einem ersten Stromwert bestromt sind, wobei eine zweite Anzahl von Teilwicklungen in Reihe geschaltet sind und somit gemeinsam mit einem zweiten Stromwert, der kleiner ist als der erste Stromwert, bestromt sind,
- und/oder wobei die erste Anzahl von Teilwicklungen mit einem ersten Wicklungsdraht und die zweite Anzahl von Teilwicklungen mit einem zweiten Wicklungsdraht gewickelt sind, wobei der Drahtdurchmesser des ersten Wicklungsdrahtes größer ist als der Drahtdurchmesser des zweiten Wicklungsdrahtes.

5. Verfahren nach mindestens einem der vorangegangenen Ansprüche,
**dadurch gekennzeichnet, dass**
eine jeweilige Teilwicklung um einen jeweils zugeordneten Dom (60) eines Spulenkörpers (9) herum ausgeführt ist, wobei die Dome (60) sich aus einem gemeinsamen Grundkörper erheben
wobei der jeweilige Dom (60) als Spulenkern einer jeweiligen Teilwicklung vorgesehen ist.

6. Verfahren nach mindestens einem der vorangegangenen Ansprüche,
**dadurch gekennzeichnet, dass**
der Grundkörper im Wesentlichen als Rotationskörper ausgeführt ist, wobei der Grundkörper eine torusförmige Vertiefung aufweist, auf deren Grund die Dome (60) angeordnet sind.

7. Verfahren nach mindestens einem der vorangegangenen Ansprüche,
**dadurch gekennzeichnet, dass**
die Bremse zum Erzeugen von Bremsmoment an einer Welle (10) vorgesehen ist, wobei die Wellenachse Symmetrieachse des Rotationskörpers ist.

8. Verfahren nach mindestens einem der vorangegangenen Ansprüche,
**dadurch gekennzeichnet, dass**
die Teilwicklungen in Umfangsrichtung um die Achse herum voneinander regelmäßig beabstandet sind.

9. Verfahren nach mindestens einem der vorangegangenen Ansprüche,
**dadurch gekennzeichnet, dass**
der Spulenkörper (9) aus Ferrit oder einem anderen Material gefertigt ist, das eine magnetische Permeabilität µᵣ größer ist als 100 oder 1000.

10. Verfahren nach mindestens einem der vorangegangenen Ansprüche,
**dadurch gekennzeichnet, dass**
die Teilwicklungen gleichsinnig ausgeführt sind.

11. Verfahren nach mindestens einem der Ansprüche 1 bis 9,
**dadurch gekennzeichnet, dass**
die zueinander nächstbenachbarte Teilwicklungen mit gegenläufigem Wicklungssinn ausgeführt sind.

12. Verfahren nach mindestens einem der vorangegangenen Ansprüche,
**dadurch gekennzeichnet, dass**
mittels Bestromung der Wicklung eine derartige elektromagnetische Kraft erzeugbar ist, dass eine aus einem ferromagnetischen Material gefertigte Ankerscheibe (6) entgegen einer von Federelementen (7) erzeugten Kraft zur Wicklung axial anziehbar ist und
bei unbestromter Wicklung die Ankerscheibe (6) mittels der von den Federelementen (7) erzeugten Federkraft auf einen Belagträger (1) mit Bremsbelägen axial hin bewegbar ist, so dass eine Bremskraft durch den relativ zur Ankerscheibe (6) und einem weiteren stationären Teil, nämlich Bremslagerschild (2), drehbar gelagerte Belagträger (1) erzeugbar ist,
wobei der Belagträger (1) auf einer Welle (10) formschlüssig verbunden ist, auf einer am Bremslagerschild (2) gelagerten Welle (10).

13. Verfahren nach mindestens einem der vorangegangenen Ansprüche,
**dadurch gekennzeichnet, dass**
eine erste Anzahl der Teilwicklungen unabhängig von der restlichen Anzahl der Teilwicklungen bestrombar ist.

14. Verfahren nach mindestens einem der vorangegangenen Ansprüche,
**dadurch gekennzeichnet, dass**
eine erste Anzahl von Teilwicklungen in Reihe geschaltet sind und somit gemeinsam mit einem ersten Stromwert bestromt sind,
wobei eine zweite Anzahl von Teilwicklungen in Reihe geschaltet sind und somit gemeinsam mit einem zweiten Stromwert, der kleiner ist als der erste Stromwert, bestromt sind.

15. Verfahren nach mindestens einem der vorangegangenen Ansprüche,
**dadurch gekennzeichnet, dass**
die erste Anzahl von Teilwicklungen mit einem ersten Wicklungsdraht und die zweite Anzahl von Teilwicklungen mit einem zweiten Wicklungsdraht gewickelt sind, wobei der Drahtdurchmesser des ersten Wicklungsdrahtes größer ist als der Drahtdurchmesser des zweiten Wicklungsdrahtes.

16. Verfahren nach mindestens einem der vorangegangenen Ansprüche,
**dadurch gekennzeichnet, dass**
der von den Teilwicklungen erzeugte Fluss im Wesentlichen durch die Ankerscheibe (6) und den Spulenkörper (9) samt Domen (60) geführt wird.

## Claims

1. Method for operating a brake,
wherein the brake is an electromagnetically actuable brake,
the brake coil (8) of which comprises a winding which is formed from a first number and a second number of partial windings,
**characterised in that**
for releasing the brake, the first number of partial windings are supplied within a first time period with an electric current which is higher than that current with which the second number of partial windings are supplied after the first time period.

2. Method according to claim 1,
**characterised in that**
the current is always kept so low that the material of the coil former (9) is not saturated,
or **in that**
the current is so high that the material of the coil former (9) is at least partially saturated, wherein the flux is not led through the shaft (10).

3. Method according to claim 1 or 2,
wherein the base body is configured substantially as a body of revolution, wherein the base body has a torus-shaped recess, on the base of which the domes (60) are arranged.

4. Method according to claim 1, 3 or 2,
- wherein a first number of partial windings are connected in series and thus jointly supplied with current having a first current value, wherein a second number of partial windings are connected in series and thus jointly supplied with current having a second current value which is less than the first current value,
- and/or wherein the first number of partial windings are wound with a first winding wire and the second number of partial windings are wound with a second winding wire, wherein the wire diameter of the first winding wire is greater than the wire diameter of the second winding wire.

5. Method according to at least one of the preceding claims, **characterised in that**
a respective partial winding is arranged around a respectively associated dome (60) of a coil former (9), wherein the domes (60) rise from a common base body
wherein the respective dome (60) is provided as a coil core of a respective partial winding.

6. Method according to at least one of the preceding claims, **characterised in that**
the base body is configured substantially as a body of revolution, wherein the base body has a torus-shaped recess, on the base of which the domes (60) are arranged.

7. Method according to at least one of the preceding claims, **characterised in that**
the brake is provided for generating braking torque on a shaft (10), wherein the shaft axis is the axis of symmetry of the body of revolution.

8. Method according to at least one of the preceding claims, **characterised in that**
the partial windings are regularly spaced from one another in the circumferential direction around the axis.

9. Method according to at least one of the preceding claims, **characterised in that**
the coil former (9) is made of ferrite or another material which has a magnetic permeability µᵣ greater than 100 or 1000.

10. Method according to at least one of the preceding claims, **characterised in that**
the partial windings are arranged with the same winding sense.

11. Method according to at least one of claims 1 to 9, **characterised in that**
the partial windings nearest adjacent to one another are arranged with opposite winding sense.

12. Method according to at least one of the preceding claims, **characterised in that**
by supplying current to the winding such an electromagnetic force can be generated that an armature disc (6) made of a ferromagnetic material can be axially attracted to the winding against a force generated by spring elements (7) and
when the winding is not supplied with current the armature disc (6) is movable axially towards a lining carrier (1) with brake linings by means of the spring force generated by the spring elements (7), so that a brake force can be generated by the lining carrier (1) rotatably mounted relative to the armature disc (6) and a further stationary part, namely brake end shield (2),
wherein the lining carrier (1) is connected in a form-locking manner on a shaft (10), on a shaft (10) mounted on the brake end shield (2).

13. Method according to at least one of the preceding claims, **characterised in that**
a first number of partial windings can be supplied with current independently of the retaining number of partial windings.

14. Method according to at least one of the preceding claims, **characterised in that**
a first number of partial windings are connected in series and thus jointly supplied with current having a first current value,
wherein a second number of partial windings are connected in series and thus jointly supplied with current having a second current value which is less than the first current value.

15. Method according to at least one of the preceding claims, **characterised in that**
the first number of partial windings are wound with a first winding wire and the second number of partial windings are wound with a second winding wire, wherein the wire diameter of the first winding wire is greater than the wire diameter of the second winding wire.

16. Method according to at least one of the preceding claims, **characterised in that**
the flux generated by the partial windings is led substantially through the armature disc (6) and the coil former (9) together with domes (60).

## Revendications

1. Procédé pour faire fonctionner un frein,
sachant que le frein est un frein à actionnement électromagnétique,
dont la bobine de frein (8) comprend un enroulement qui est formé d'un premier nombre et d'un deuxième nombre d'enroulements partiels,
**caractérisé en ce que**, pour desserrer le frein, le premier nombre d'enroulements partiels est, pendant une première durée, sollicité par un courant électrique qui est plus puissant que le courant par lequel le deuxième nombre d'enroulements partiels est sollicité à la suite de la première durée.

2. Procédé selon la revendication 1, **caractérisé en ce que** le courant est constamment maintenu d'une faiblesse telle que le matériau du corps de bobine (9) n'est pas saturé,
ou **en ce que** le courant est d'une puissance telle que le matériau du corps de bobine (9) est au moins partiellement saturé, sachant que le flux n'est pas dirigé à travers l'arbre (10).

3. Procédé selon la revendication 1 ou 2, sachant que le corps de base est réalisé pour l'essentiel sous forme de corps de révolution, sachant que le corps de base présente un renfoncement toroïdal sur le fond duquel sont disposés les dômes (60).

4. Procédé selon la revendication 1, 3 ou 2,
- sachant qu'un premier nombre d'enroulements partiels sont montés en série et sont donc conjointement alimentés par une première valeur de courant, sachant qu'un deuxième nombre d'enroulements partiels sont montés en série et sont donc conjointement alimentés par une deuxième valeur de courant, qui est inférieure à la première valeur de courant,
- et/ou sachant que le premier nombre d'enroulements partiels sont enroulés avec un premier fil métallique d'enroulement et le deuxième nombre d'enroulements partiels avec un deuxième fil métallique d'enroulement, sachant que le diamètre de fil du premier fil métallique d'enroulement est supérieur au diamètre de fil du deuxième fil métallique d'enroulement.

5. Procédé selon au moins une des revendications précédentes, **caractérisé en ce qu'**un enroulement partiel respectif est réalisé tout autour d'un dôme (60) respectivement associé d'un corps de bobine (9), sachant que les dômes (60) se dressent à partir d'un corps de base commun,
sachant que le dôme respectif (60) est prévu comme noyau de bobine d'un enroulement partiel respectif.

6. Procédé selon au moins une des revendications précédentes, **caractérisé en ce que** le corps de base est réalisé pour l'essentiel sous forme de corps de révolution, sachant que le corps de base présente un renfoncement toroïdal sur le fond duquel sont disposés les dômes (60).

7. Procédé selon au moins une des revendications précédentes, **caractérisé en ce que** le frein destiné à produire un couple de freinage est prévu sur un arbre (10), sachant que l'axe de l'arbre est l'axe de symétrie du corps de révolution.

8. Procédé selon au moins une des revendications précédentes, **caractérisé en ce que** les enroulements partiels sont, en direction périphérique, régulièrement espacés les uns des autres tout autour de l'axe.

9. Procédé selon au moins une des revendications précédentes, **caractérisé en ce que** le corps de bobine (9) est réalisé en ferrite ou en un autre matériau qui présente une perméabilité magnétique µᵣ qui est supérieure à 100 ou 1000.

10. Procédé selon au moins une des revendications précédentes, **caractérisé en ce que** les enroulements partiels sont réalisés de même sens.

11. Procédé selon au moins une des revendications 1 à 9, **caractérisé en ce que** les enroulements partiels immédiatement voisins les uns des autres sont réalisés avec des sens d'enroulement contraires.

12. Procédé selon au moins une des revendications précédentes, **caractérisé en ce que**, en alimentant en courant l'enroulement, on peut produire une force électromagnétique telle qu'un disque d'induit (6) fabriqué en un matériau ferromagnétique peut être attiré axialement vers l'enroulement à l'encontre d'une force produite par des éléments (7) à effet de ressort,
et, lorsque l'enroulement n'est pas alimenté en courant, le disque d'induit (6) peut, au moyen de la force de ressort produite par les éléments (7) à effet de ressort, être déplacé axialement en direction d'un porte-garnitures (1) pourvu de garnitures de frein, de sorte qu'une force de freinage peut être produite par le porte-garnitures (1) monté à rotation par rapport au disque d'induit (6) et à un autre élément stationnaire, à savoir un flasque de frein (2),
sachant que le porte-garnitures (1) est assemblé par complémentarité de forme sur un arbre (10), sur un arbre (10) monté sur le flasque de frein (2).

13. Procédé selon au moins une des revendications précédentes, **caractérisé en ce qu'**un premier nombre d'enroulements partiels peut être alimenté en courant indépendamment du nombre restant d'enroulements partiels.

14. Procédé selon au moins une des revendications précédentes, **caractérisé en ce qu'**un premier nombre d'enroulements partiels sont montés en série et sont donc conjointement alimentés par une première valeur de courant,
sachant qu'un deuxième nombre d'enroulements partiels sont montés en série et sont donc conjointement alimentés par une deuxième valeur de courant, qui est inférieure à la première valeur de courant,

15. Procédé selon au moins une des revendications précédentes, **caractérisé en ce que** le premier nombre d'enroulements partiels sont enroulés avec un premier fil métallique d'enroulement et le deuxième nombre d'enroulements partiels avec un deuxième fil métallique d'enroulement, sachant que le diamètre de fil du premier fil métallique d'enroulement est supérieur au diamètre de fil du deuxième fil métallique d'enroulement.

16. Procédé selon au moins une des revendications précédentes, **caractérisé en ce que** le flux produit par les enroulements partiels est dirigé pour l'essentiel à travers le disque d'induit (6) et le corps de bobine (9), dômes (60) compris.
